# EUROPEAN PATENT APPLICATION

(11) **EP 2 688 023 A1**
(43) Date of publication of application: **22.01.2014**
(21) Application number: 13172502.0
(22) Date of filing: 18.06.2013
(51) Int. Cl.: G06Q 20/02, G06Q 20/32

(54) **"A method for paying via a mobile device, relative mobile device and computer-program product"**

(30) Priority: 19.07.2012 IT TO20120636
(71) Applicant: Movincom Servizi S.p.A., 10122 Torino (IT)
(72) Inventor: Sponza, Enrico, I-10122 Torino (IT)
(74) Representative: Meindl, Tassilo

(57) **Abstract**

A method of paying via a mobile device at least one product and/or service offered by a merchant (1), comprising the steps of:
- transmitting (2060) an electronic message authorizing the payment for products and/or services to a payment system (1, 4) which manages the payments of the merchant (1); and
- receiving (2062) an electronic confirmation message from the payment system (1, 4) indicating the result of the authorization of the payment.

In particular, in the case wherein the confirmation message is an approval message which indicates the authorization of payment:
a) a display is generated (2064) which contains a summary of the products and/or services paid for,
b) an event is detected (2068) which validates the payment for products and/or services, and
c) the approval message is classified (2070) as a validated approval message.

## Description

### TEXT OF THE DESCRIPTION

### Field of invention

The present invention relates to techniques for the purchase and the authorization of payments via mobile devices, such as mobile phones.

The invention has been particularly developed in order to improve security and user experience of such payments.

### Description of the prior art

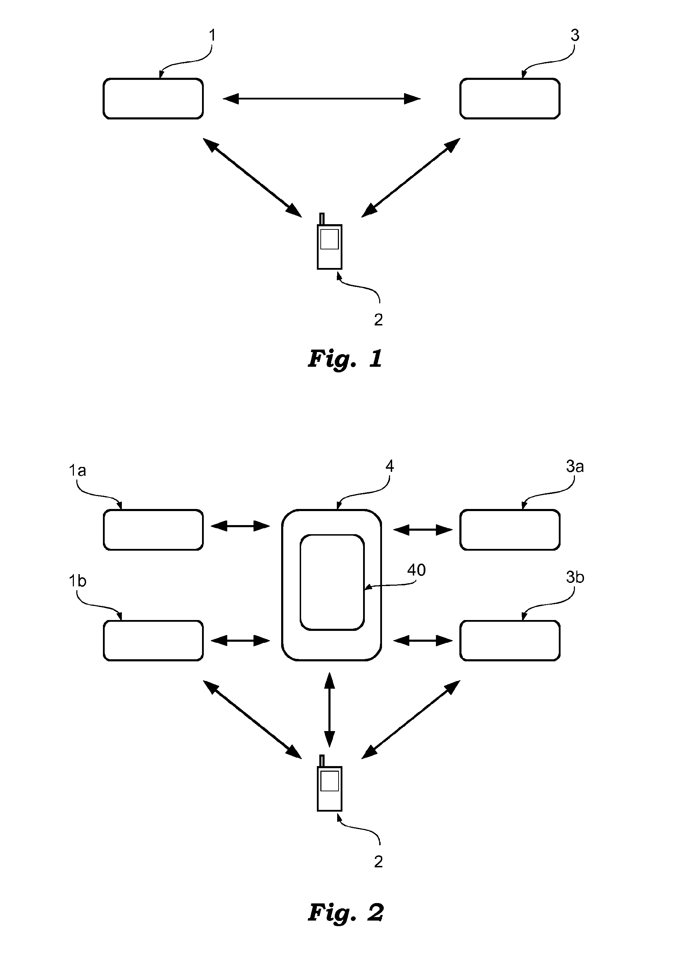

Figure 1 shows a generic architecture of a system for purchasing via mobile devices.

In the example considered a merchant 1 offers certain products or services to a user who wants to buy some of these products via his mobile device 2.

Typically, this payment is not made directly through the telephone operator using the phone bill or the remaining credit on a prepaid card, but payment is handled via a payment operator 3, such as the service that manages the bank account or credit card of the user.

Accordingly, it is of considerable importance how these various communications between the parties of the sale are carried out, in such a way that the operation is easy and secure.

Furthermore, an architecture that allows the management of a plurality of merchants and a plurality of payment operators would be advantageous.

### Object and summary of the invention

The object of the invention is to provide an architecture that is secure, simple, efficient and interoperable for the user (buyer), addressed to a plurality of users with limited investments for merchants (sellers) and in compliance with national and international bank standards.

In order to achieve the aforesaid object, the invention relates to a method for payment via a mobile device having the features specified in accompanying claim 1. The invention also relates to the relative mobile device, as well as to a computer-program product, loadable into the memory of at least one processor and comprising portions of software code capable of implementing the steps of the method when the product is run on at least one processor. Thus as used herein, reference to such a computer-program product is understood to be equivalent to a reference to a computer-readable medium containing instructions for controlling the processing system for coordinating implementation of the method according to the invention. The reference to "at least one processor" is evidently intended to highlight the possibility that the present invention is implemented in a modular and/or distributed form.

Further advantageous features of the invention are the subject of the accompanying dependent claims.

All of the accompanying claims are intended to be an integral part of the technical disclosure provided here in relation to the invention.

As mentioned previously, the object of the invention is to provide an architecture that is secure, simple, efficient and interoperable.

In various embodiments, the merchant can verify the payment directly through the user's mobile device.

For example, in various embodiments, the user transmits an electronic message via his mobile device authorizing the payment of at least one product and/or service. In particular, this message is transmitted to a payment system that manages the payments of the merchant that offers the products and may comprise, for example, a computer system of the merchant, a computer system of the user's payment institution and a management system that manages payments between multiple merchants and multiple payment institutions.

In various embodiments, the user, or rather the mobile device, receives an electronic confirmation message from the payment system indicating the result of authorization of the payment, i.e. a message that approves or denies authorization.

In various embodiments, in the case wherein the message is an approval message, the mobile device generates and shows a display that contains a summary of the products and/or services paid for.

In various embodiments, the merchant can check the summary, validate the purchase and deliver the product and/or service.

Consequently, in various embodiments, the mobile device is configured to detect an event that validates the payment of products and/or services, such as the pressing of a validation button and/or the movement of a finger on the display of the mobile device in a diagonal direction.

Subsequently, the mobile device classifies the approval message as validated. For example, in various embodiments, the confirmation message received from the payment system is initially archived, i.e. saved, in a first register of messages, and when an approval message is validated, that message is archived, i.e. moved, to a second register of messages that can be viewed but no longer validated.

In various embodiments, to ensure that the approval message is authentic, the mobile device displays and/or reproduces a graphic or audio element and/or other visual effects, such as a word, a number, an alphanumeric sequence, an image, a sound and/or video sequence. Preferably the element is displayed and/or reproduced when the payment is validated.

For example, in various embodiments, the element is received from the payment system along with the approval message.

Alternatively, in other embodiments, the mobile device receives from the payment system, for example, along with the approval message, a univocal code that is associated with the specific payment. In this case, when the payment is validated, the mobile device transmits this univocal code to the payment system and only at this moment will receive the element to display and/or reproduce.

Consequently, being familiar with the element that should be displayed and/or reproduced, the merchant is able to verify the correctness of the payment directly on the user's mobile device.

### Brief description of the drawings

The present invention will now be described in detail with reference to the attached drawings, provided purely by way of non-limiting example, wherein:
- Figure 1 has been already described previously;
- Figures 2 and 3 show embodiments of payment systems according to the present invention;
- Figures 4, 6, 7 and 8 are flow diagrams that illustrate details of the payment systems of Figures 2 and 3; and
- Figure 5 shows an embodiment of a user interface for payment via a mobile device.

### Detailed description of embodiments

In the following description various specific details are illustrated aimed at a thorough understanding of the embodiments. The embodiments can be implemented without one or more of the specific details, or with other methods, components, materials, etc. Other known cases, structures, materials, or operations are not shown or described in detail to avoid obscuring various aspects of the embodiments.

The reference to "an embodiment" in the context of this description means that a particular configuration, structure or feature described in relation to the embodiment is included in at least one embodiment. Thus, phrases such as "in an embodiment," possibly present in different places of this description, do not necessarily refer to the same embodiment. In addition, particular shapes, structures or features may be combined in an appropriate way in one or more embodiments.

The references used herein are for convenience only and therefore do not define the field of protection or the extent of the embodiments.

Figure 2 shows an embodiment of the payment system according to the present invention.

In the embodiment considered, the system comprises a plurality of merchants 1, which offer products and/or services and a plurality of payment operators 3, such as banking institutions. For example, in the embodiment considered, two merchants 1a and 1b are shown, and two payment operators 3a and 3b.

The system further comprises a payment management system 4 that interfaces the plurality of merchants 1 with the plurality of payment operators 3.

The person skilled in the art will appreciate that some of these aspects of the payment system will be handled by dedicated hardware or software. For example, in various embodiments, the operations of the payment management system can be implemented using software code portions that are executed by a computer or a processing system with distributed architecture (known as cloud computing).

In the embodiment considered, the management system 4 is responsible for converting the communications received by the various merchants 1, and transmitting them to the respective payment operators 3. In this way, it is not necessary that each merchant 1 has to be compatible with the various communication protocols of the payment operators 3, but it is sufficient that the merchants 1 implement just a single communication protocol, i.e. the communication protocol of the management system 4.

In various embodiments, the operator is not necessarily the user's bank directly, but could also be another qualified payment operator allowing the registration and the subsequent use of the service to customers of non-participating banks. For example, the user may record the details of his credit card and the payment service could use the credit card payment circuit.

Consequently, in the embodiment considered, the mobile device 2 transmits, for example via a message of the Short Message Service (SMS), a purchase request to a merchant 1. Subsequently, the merchant 1 forwards this request to the management system 4 which converts the request and forwards the converted request to the correct payment operator 3.

In the embodiment considered, to identify the payment operator associated to a specific mobile device or user 2, the management system 4 comprises a database 40 that contains data that associates a respective payment operator with each mobile device or user.

Consequently, in the embodiment considered, the management system 4 is configured to receive a payment request from a merchant 1, containing information needed to identify the device or the user requesting a purchase. For example, in one embodiment, the data which identifies the user is the number of the mobile phone or mobile device 2 which has transmitted the SMS with the purchase request, or its IMEI (International Mobile Equipment Identity) code. Once the corresponding payment operator 3 is identified through the database 40, the management system 4 transmits the payment request to the respective payment operator 3.

The payment operator 3 in turn can then grant or deny the payment. For example, the payment operator 3 can verify if the user has sufficient credit. Consequently, the payment operator 3 transmits a message to the merchant 1 via the management system 4 that confirms or denies the payment and the merchant can potentially deliver/supply the product/service requested.

In one embodiment, it is also envisaged that the payment operator 3 transmits a payment confirmation to the user 2. For example, the operator 3 can send an SMS message to the user 2 that summarizes the amount charged and the details of the merchant who requested the payment.

As mentioned previously, in one embodiment, the management system 4 comprises a database 40 that contains data that enable association of the various mobile devices or users 2 with the respective payment operators 3.

In one embodiment, such an association is created by a subscription to the payment service. For example, in one embodiment, this registration is carried out by the payment operator 3 which communicates the registration data to the management system 4. For example, such a subscription may be done under a corresponding entry in an internet banking service, which associates a specific telephone number to a bank account, credit card or other payment method.

Consequently, the embodiments described above enable the offering of products by a plurality of merchants 1 to a plurality of users 2 via a simple centralized management system 4. In this way, the payment system is open, and new merchants 1 or payment operators 3 can be easily added.

In one embodiment, to increase the security of the system, it is envisaged that the user must authorize each payment by entering a security code. For example, this mechanism may be useful to prevent payments in the case of theft of the mobile device 2 or unwanted requests for payments.

For example, in one embodiment, the user receives this security code during registration with the payment operator 3. In this case, the user enters the same security code to authorize the payment, and the code is transmitted, together with the purchase message, to the merchant 1. In a similar way, the merchant 1 transmits this code, together with the payment request via the management system 4 to the payment operator 3, which verifies the correctness of the security code.

In one embodiment it is also envisaged that this security code is transmitted in an encrypted form, for example using the MD5 or AES algorithm, or other symmetrical or asymmetrical encryption codes.

In one embodiment, to avoid that the merchant 1 (or another person who has intercepted the payment request) can reuse the security code for another payment, every payment request has a new transaction code (for example, a consecutive number for purchase requests) and the security code is encrypted together with the transaction code. Therefore, the sequence of characters of the encrypted code can vary for each transaction and is usable only once, and only the payment operator 3 is able to verify the correctness of the security code.

However, as mentioned previously, it is necessary that the user 2 first transmits a purchase request to a merchant 1 to request a desired product or service.

Consequently, the device 2 needs to know the electronic address, such as an IP address, an e-mail address, a website address or another address that allows electronic contact with the merchant, or the telephone number to which to transmit the purchase request.

The inventor has observed that this problem could be solved by specific applications. For example, each merchant 1 could develop a specific application for this purpose that knows the email address or telephone number of the merchant 1.

On one hand, this requires that the user 2 has to download applications in advance on his mobile phone and every merchant 1 is required to develop applications for leading mobile operating systems, such as Symbian, iPhone OS, Android, or a generic Java application. Each user must download a specific application for every merchant 1.

On the other hand, this approach improves the security of the system. In fact, as mentioned above, the payment is normally authorized by a security code. However, it is often not possible to encrypt this code together with a transaction code, e.g., to allow the use of different mobile devices. Therefore, the merchant receives a security code (possibly encrypted) that could potentially be reused for other payments. Accordingly, the need exists to avoid unauthorized persons gaining access to these security codes. However, in this context the fact that the user has to download the application onto his mobile device helps, as the user can immediately verify the reliability of the merchant. Furthermore, modern mobile phones are usually configured in order to only allow the installation of certified applications and therefore the merchant must be a trustworthy subject.

The inventor has observed that the problems mentioned above can also be solved through a single configurable application offered, for example, directly by the administrator of the management system 4. However, as mentioned above, in this case there should be a mechanism that allows verification of the reliability of the merchant and of the product/service sold.

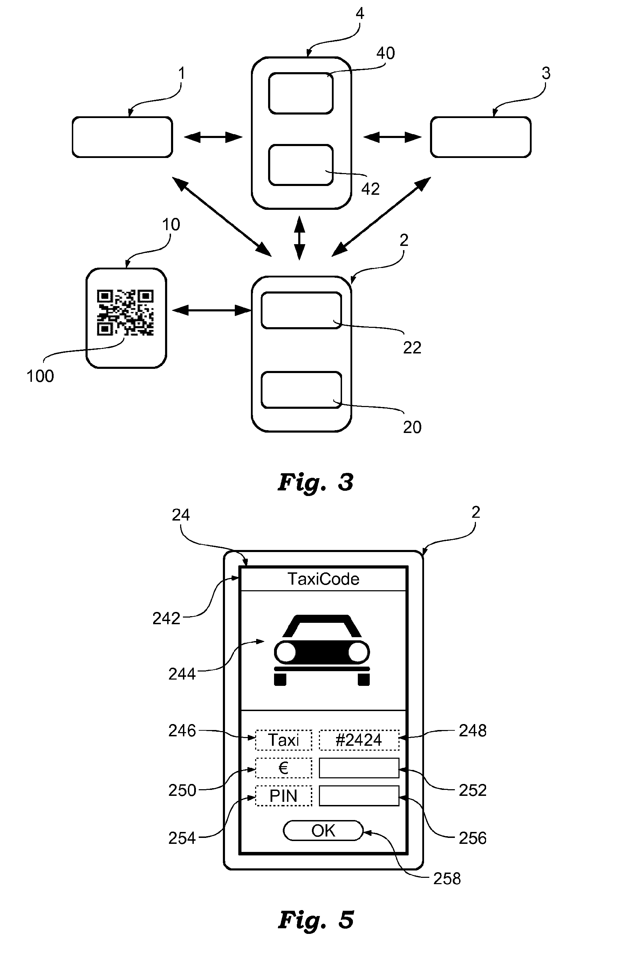

Figure 3 shows a modification of the system according to Figure 2, which allows the use of a generic application 20 on the mobile device 2.

In the embodiment considered, the merchant 1 applies a code 100 to an object 10, such as the object for sale, which identifies the merchant and the product/service offered.

Instead, the mobile device 2 comprises a sensor 22 for detecting such an identifying code for the merchant 1.

In general, the sensor 22 may be any sensor, such as an optical, magnetic or mechanical sensor. This sensor 22 can also be a transceiver, such as an RF-ID (Radio Frequency IDentification) or Bluetooth transceiver configured for detection of a code from a transponder or transceiver applied to the object 10.

For example, in a currently preferred embodiment, the code 100 is a QR code, which is a two-dimensional bar code, which is applied to a label. In this case, the sensor 22 can be a photo or video camera within the mobile device 2 which frames the label to detect the QR code.

Consequently, the device 2 is able to detect the identification code for the merchant 1 by means of the sensor 22, as well as a code that identifies the product/service.

This code could then also directly identify the electronic address or telephone number of the merchant 1 to which to transmit the purchase request. Consequently, the user 2 may directly transmit a purchase request to the address or telephone number of the merchant 1.

However, any code applied to the object 10 may be falsified by a person external to the payment system. Therefore, the user 2 could transmit a purchase request possibly also including his security code to an unauthorized subject. Consequently, this unauthorized person might even try to reuse the transmitted data improperly, for example, to damage the user.

In one embodiment, to avoid this problem, the code 100 applied to the object 10 is not directly used to transmit the purchase request to the merchant 1, but a further step is envisaged to verify the reliability of the alleged merchant and the relative product/service sold.

For example, in one embodiment, the code applied to the object 10 includes a field that identifies a merchant and a field that identifies the object sold.

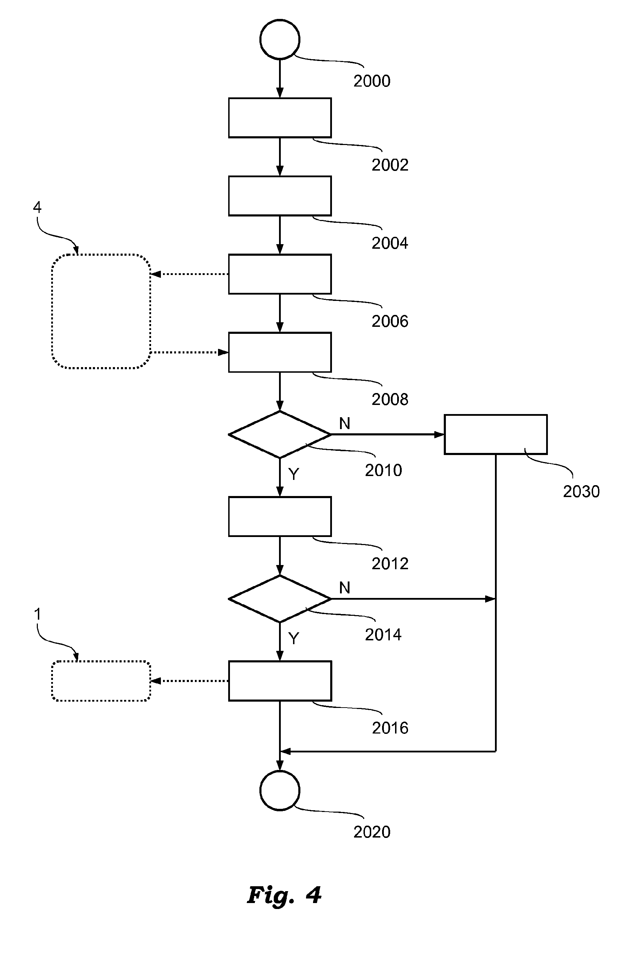

Figure 4 shows a flow chart which summarizes the main operations performed by an application 20 installed on the mobile device 2.

After an initial step 2000, the application detects the QR code 100 applied to the object 10 at a step 2002 by means of the camera 22 of the mobile device 2.

At step 2004, the application analyzes the QR code 100 and determines the identification code of the merchant and the identification code for the product/service.

At step 2006, the application transmits the code of the merchant and the code of the product/service to the management system 4. For example, for this purpose the mobile device 2 may comprise a Wi-Fi (Wireless Fidelity) transceiver and/or a UMTS (Universal Mobile Telecommunications System), HSPA (High-Speed Packet Access), or LTE (Long Term Evolution) modem, and the communication with the management system 4 can be made via an internet connection.

The management system 4 then receives the merchant code and the product/service code. Subsequently, the management system 4 compares these codes with a database 42 which contains information on merchants that are considered to be trustworthy. For example, the data in the database 42 may be created through the enrollment and verification of merchants. In the case where the merchant has been determined to be trustworthy and the product/service is actually salable, the management system returns the logo of the merchant, his telephone number, or in general data that allow correct referral of the order to the merchant 1 and finally a description of the product/service. In the opposite case, the management system 4 transmits a message that indicates that the merchant 1 is not trustworthy, or that the product/service is not available for sale.

In general, the application 20 receives information from the management system 4 that enables verification on whether the merchant 1 is trustworthy and whether the product or service is salable. Such information comprises:
- in the case wherein the merchant 1 is trustworthy, an internet address and/or a telephone number of the merchant 1, which enable the correct referral of the purchase request, and
- in the case wherein said product or service is salable, descriptive and configuration information of the product or service, allowing the user to verify the features of the product/service and the application 20 to auto-configure the information to be displayed to (and/or requested from) the user for the completion of the purchase.

Consequently, the application receives the response from the management system 4 at a step 2008, and can verify at a step 2010 if the merchant is trustworthy and if the product/service salable.

In the case wherein the merchant is not trustworthy or the product/service is not salable (output "N" of the verification step 2010), the application shows a notification at a step 2030 on the display of the mobile device 2 and the procedure terminates at a step 2020.

Instead, in the case wherein the merchant is trustworthy and the product/service available (output "Y" of the verification step 2010), the application displays at a step 2012 on the display of the device 2, a screen that summarizes the description of the product/service. For example, the application may also receive other information from the management system 4, such as the product price, the quantity of pieces contained in a product unit, the price of a possible shipment, an image of the product, a logo of the vendor, etc. In this context, Figure 5 shows a possible display that may be visualized on a display 24 of the mobile device 2.

In the embodiment considered, the display contains:
- a field 242 to display the name of the merchant 1 (for example "TaxiCode", in the name of the Cooperative RadioTaxi);
- an area 244 to display the logo of the operator or the product image;
- a field 248 to display the product name (such as the taxi code);
- a field 252 to display or insert the price of the product (the fare in this example);
- a field 256 for entering the security code of the user;
- a button 258 to confirm the transmitting of the payment request, and
- possibly fixed fields 246, 250 and 254, which contain texts configurable for a certain product.

In various embodiments, the arrangement of the various fields may also be configurable and the respective set-up information can be received from the service management system 4.

The application then checks if the user approves the purchase at a verification step 2014. For example, the user can approve the purchase by entering his security code in the field 256 and confirming using the button 258.

In general, the application 20 thus displays to a user, on a display 22, a screen according to the product information and collects any data necessary for the completion of the purchase (e.g. price, quantity, delivery address or security code).

In the case wherein the user stops the procedure (output "N" of the verification step 2014), the application terminates the procedure at step 2020.

Instead, in the case wherein the user approves the purchase (output "Y" of the verification step 2014), the application transmits, at a step 2016, the purchase request to the email address or telephone number of the merchant 1 as indicated by the management system 4 and ends at step 2020.

In general, the application 20 thus transmits a message to the email address or telephone number of merchant 1 authorizing the payment, or a message that requests the purchase and subsequent payment. For example, this message can be transmitted to the electronic address or telephone number of the merchant 1 by means of a data stream on a telephone carrier, such as a message of the SMS service or a data session univocally identified by the telephone operator or a stream including univocal identification data of the apparatus from which the identification of the ordering user can be detected automatically.

Therefore, the QR code is not used to directly transmit a purchase request to a merchant, but an extra step is added that makes the QR code dynamic and the purchase secure. In fact, the QR code (including a merchant code and a product code) is used as a pointer to locate the contact details in the database 42 for transmitting the purchase message, as well as the configuration parameters for the application 20 installed on the user's mobile device.

In fact, as described with reference to Figure 5, all the fields of the display 24 may be configurable for each combination of merchant code and product code. In general, each field can be provided or not provided for the specific configuration and where required, may be viewed as a preset non-modifiable datum with a fixed or variable value, or required as a input datum by the user (possibly with a modifiable default value). For example, for products with a fixed price only, the quantity may be requested, while for certain services, such as the taxi services, the cost of the trip may be required but not the quantity. In an essentially similar manner, for some merchants and/or products/services, a field for entering a shipping address could be activated. For the shipping address or other personal information relating to the mode of delivery, e.g. preferred days or times for delivery, or other user preferences, it will be possible to activate a profile of the user, which can be used, upon request, to centralize this information and provide it automatically during check-out to all merchants that arise for sale of products/services purchased through the application 20;

Furthermore, in the case wherein the payment operator supports such an operation, the security code may also not be required (and therefore also not transmitted to the merchant) for micro-payments, or payments with a low price. Instead, for certain merchants which require a high level of security, a verification of the user may be envisaged. For example, for some products intended for a certain group of users it might be expected that the user receives information on these products only after authentication, for example through his telephone number and security code. So, in general, the level of security could be set for each merchant.

In general, it is not necessary that in the database 42 the data of configurations for all combinations of merchant codes and product codes are archived. For example, for certain merchants a single set of configuration parameters for all products could be provided. Furthermore, a code may also be provided that indicates to the application 20 installed on the mobile device 2 to select a specific set of preinstalled configuration parameters. Finally, it might be envisaged that such configuration parameters for the application 20 are managed directly via a database at the merchant 1. For example, in this case, the management system 4 could only verify the existence of a merchant 1 and transmit a request containing the product code to the respective merchant 1. Subsequently, the respective control parameters for the particular product received, the management system 4 may forward these configuration parameters to the mobile device 2.

In various embodiments, the management system 4 can also make other checks. For example, in an embodiment, the merchant 1 could configure a deadline of the period of sale for certain products. In this case, the management system 4 may determine whether such an offer is still valid or has already expired.

In various embodiments, to allow for personalization of the data to be transmitted to the merchant 1, the management system 4 transmits information to the mobile device which specifies the syntax of the purchase request for the specific merchant.

For example, for products with fixed prices, the request may have the following format:
<RES>; <CP>; <Q>; <CV2>
   where the parameter <RES> indicates a field with configurable text, parameter <CP> indicates the product code, parameter <Q> indicates the amount requested by the user and parameter <CV2> indicates the security code which may be encrypted.

Instead, for products with varying prices, such as a taxi service, the request may have the following format:
<RES>; <TOT>; <CV2>
   where the parameter <RES> indicates a field with configurable text, the parameter <TOT> indicates the cost as entered by the user and the parameter <CV2> indicates the security code which may be encrypted.

Finally, the merchant 1 receives the purchase request and can transmit the respective payment request through the management system 4 to the respective payment operator 3.

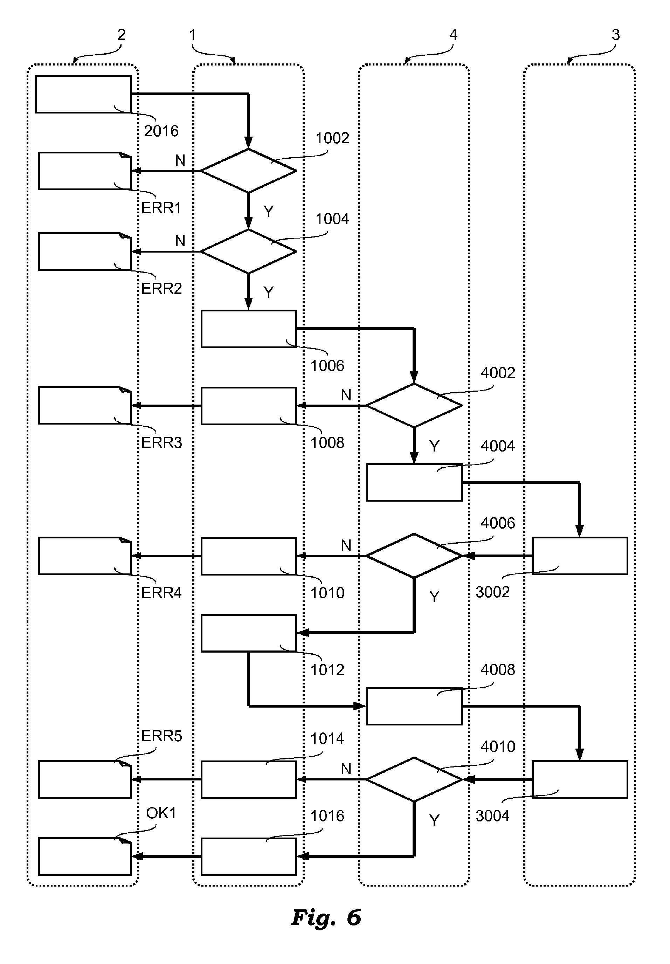

Figure 6 shows a possible implementation of the exchange of information between the merchant 1, the management system 4, and the payment operator 3.

As mentioned previously, the user, via the use of the application 20 installed on the mobile device 2, such as a mobile phone, transmits a message at a step 2016 containing a purchase request to a merchant 1.

At a verification step 1002, the application of the merchant analyzes the received message in order to verify the accuracy of the syntax.

In the case wherein the message contains syntax errors (output "N" of the verification step 1002), the application of the merchant 1 transmits an error message ERR1 to the user 2, for example via SMS.

Instead, in the case in which the syntax is correct (output "Y" of the verification step 1002), the application of the merchant 1 performs at a verification step 1004 the verification of availability of the product/service, and the amount to be debited.

In the case wherein the availability is not sufficient (output "N" of the verification step 1004), the application of the merchant 1 transmits an error message ERR2 to the user 2.

Instead, in the case wherein the product/service requested by the user is available (output "Y" of the verification step 1004), the application of the merchant 1 transmits to the management system 4 at a step 1006 a message containing a request for authorization of the payment of the amount verified.

At step 4002, the management system 4 receives the message and processes the request, verifying the user's subscription to the payment service, identifying the payment operator associated with the user and performing any checks needed for relaying of the transaction to the payment operator. Preferably, the application of the management system 4 verifies whether the messages containing requests for payment authorization only arrive from specific addresses, for example in the case wherein the communication between the merchant 1, the management system 4 and the payment operator 3 are exchanged over the Internet, these addresses are the IP addresses of the merchants subscribed to the service.

If the user has not subscribed to the payment service (output "N" of the verification step 4002), or the application of the management system 4 is not able to find the identification of the user in the database 40, the application of the management system 4 notifies such an error to the merchant 1, and at a step 1008 the application of the merchant 1 can transmit an error message ERR3 to the user 2 which indicates the fact that the user has not been subscribed to the service.

In the case wherein the user is subscribed to the payment service (output "Y" of the verification step 4002), or the application of the management system 4 has been able to find the identification of the user and the respective payment operator in the database 40, the application of the management system 4 records the transaction to be authorized in a pending state and forwards the request for authorization at a step 4004 to the payment operator 3 associated with the user.

At a step 3002, the application of the payment operator 3 processes the authorization request, forwarding it where necessary to authorizing circuits, and communicates the result of the operation to the management system 4.

At a verification step 4006, the application of the management system 4, when the outcome of the operation is received, verifies the result of the authorization.

In the case wherein authorization has been denied (output "N" of the verification 4006), the application of the management system 4 notifies the error to the merchant 1, and at a step 1010 the application of the merchant 1 can transmit an error message ERR4 to the user 2 indicating that the authorization was denied.

Instead, in the case wherein authorization has been confirmed (output "Y" of the verification step 4006), the application of the management system 4 updates the status of the transaction from pending to authorized and communicates the result to the merchant 1.

At step 1012, receiving a successful authorization request, the application of the merchant 1 requests entry into the accounts by transmitting an accounting request to the management system 4.

At step 4008, having received the request for accounting, the application of the management system 4 inserts the operation to be accounted in a pending state, and forwards it to the payment operator of 3.

At step 3004, the application of the payment operator processes the accounting request and reports the outcome of this operation to the management system 4.

At a verification step 4010, having received the outcome of the accounting, the application of the management system 4 verifies the result of the authorization.

In the case wherein entry in the accounts has been denied (output "N" of the verification step 4010), the application of the management system 4 notifies such an error to the merchant 1, and at a step 1014 the application of the merchant 1 can transmit an error message ERR5 to the user 2 which indicates the fact that the accounting has been denied.

Instead, in the case wherein entry in the accounts has been confirmed (output "Y" of the verification step 4010), the application of the management system 4 performs the update of the accounting operation from pending to accounted for and communicates the result to the merchant 1.

Consequently, in the case of successful accounting, the application of the merchant 1 transmits a confirmation of the purchase OK1 at a step 1016 to the user and authorizes the delivery of products/services.

In one embodiment there is the possibility to carry out an "explicit" accounting, in which the product is released directly against the authorization 3002 and entry in the accounts may be performed at a later time. Therefore, the steps 1012, 4008, 3004, 4010, and 1014 are purely optional and the output "Y" of the verification step 4006 could lead directly to step 1016.

In one embodiment, to allow the purchase of more products through a single purchase request, the sales system is configured to manage a virtual shopping cart.

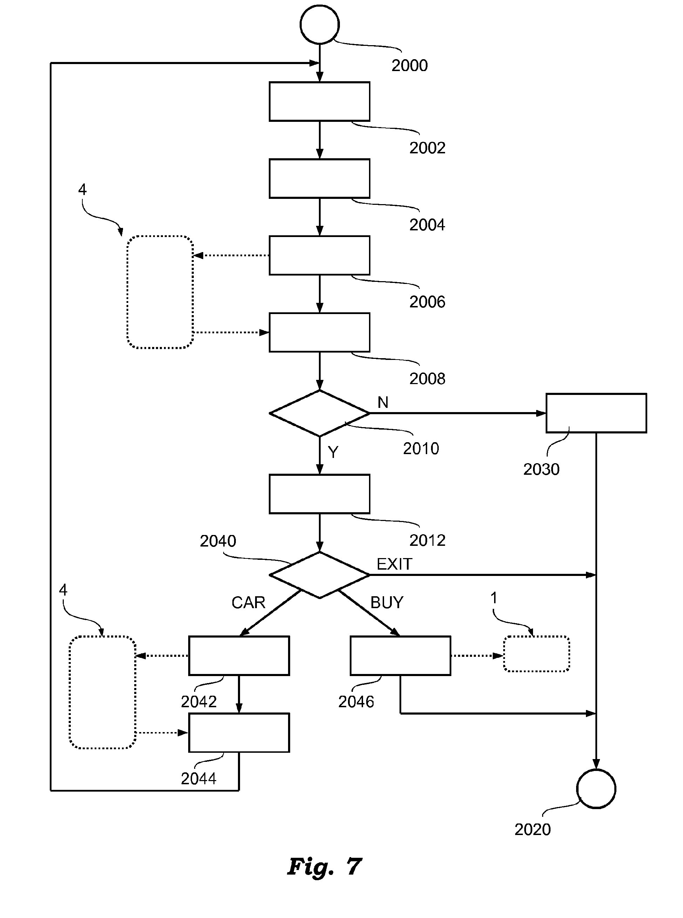

In this context, Figure 7 shows a flow diagram that summarizes the main operations. The flow diagram is essentially based on the flow chart shown in Figure 4 and therefore all the steps that have been described previously will not be repeated.

Also in this case, the application detects at a step 2002 via the camera 22 of the mobile device 2, the QR code 100 applied to the object 10, and at a step 2004, the application analyzes the QR code 100 and determines the identification code for the merchant and the identification code for the product/service.

At step 2006, the application transmits the merchant code and the code of the product/service to the management system 4 and the application receives the response from the management system 4 at step 2008.

Consequently, the application 20 can verify at a verification step 2010 if the merchant is trustworthy and the product/service salable.

In the case wherein the merchant is trustworthy (output "Y" of the verification step 2010), the application shows on the display of the device 2 at a step 2012, a display that summarizes the description of the product/service.

While in the embodiment described with reference to Figure 4 only a single button was provided to transmit the purchase message to the merchant 1, in this case there are two buttons, such as a button with the word "Add to shopping cart" and a button labeled "Buy".

The application 20 then checks the user's action at a verification step 2040.

In the case wherein the user stops the procedure (output "EXIT" of the verification step 2040), the application terminates the procedure at step 2020.

Instead, in the case wherein the user presses the button "Add to shopping cart", and adds a product to his cart (output "CAR" of the verification step 2040), the application transmits at a step 2042 to the management system 4 a message containing the product code, and possibly the price or quantity. The management system 4 initializes a temporary list of products of the user at the first entry and adds the selected product to the list. Alternatively, the user could also transmit the text directly in the purchase request in the format specified by the merchant, and the management system 4 could save the text of the various purchase messages in the list of products.

Subsequently, the management system 4 returns a code that identifies the list of products of the user. Consequently, the application receives this code at a step 2044 and returns to the step 2002 so that the user can acquire other QR codes and add more products to the list.

Finally, in the case wherein the user presses the button "Buy" and approves the purchase (output "BUY" of the verification step 2040), the application transmits the purchase request at a step 2046 to the electronic address or telephone number of the merchant 1, as indicated by the management system 4 and ends at step 2020. However, in this case, the message does not contain the product code but the code of the list of products of the user archived in the management system 4.

Consequently, the application of the merchant 1 contacts the management system 4 and requests the list of products for the code received by the user 2.

The person skilled in the art will appreciate that the embodiments described above have many advantages, especially the security and interoperability, which allows the subscription by the user to a single payment operator and the possibility to operate with a unique application with any member merchant.

However, the inventor has observed that the solutions described above (both the solutions using dedicated applications and those that use a generic application) have the disadvantage that the merchant 1 can only deliver the product or service when an approval message is received from the management system 4 at step 1016. Therefore, it is required that the merchant 1 has access to a processor, such as a desktop computer or a mobile device, which is able to receive and/or view the message generated by the management system in step 4010.

In various embodiments, to avoid this problem, the merchant can view the confirmation message of the purchase via the user's mobile device, for example the application 20 used to acquire the product.

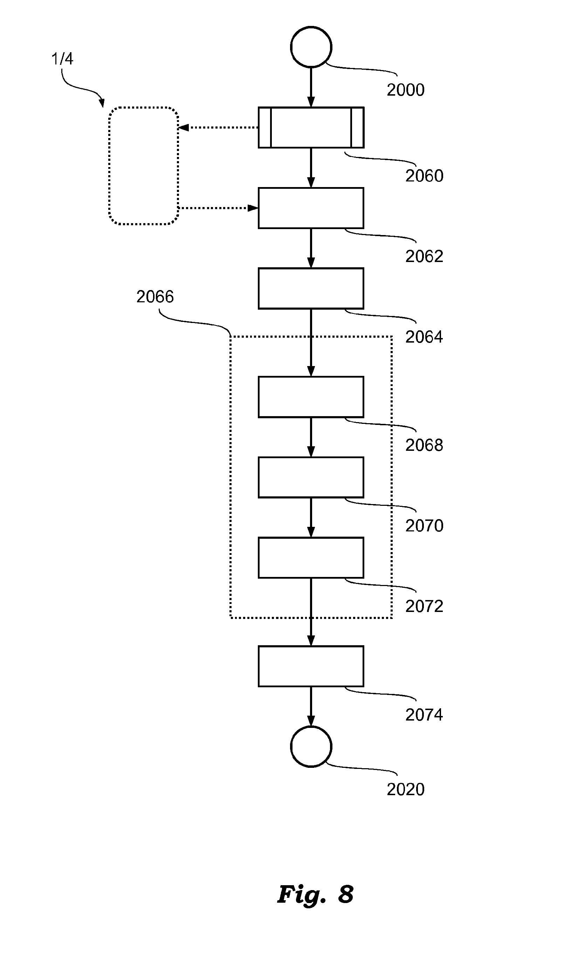

Figure 8 shows an embodiment of a method that allows carrying out and verifying a purchase through an application installed on the user's device 2. As mentioned above, this method could also be implemented in the application 20.

After an initial step 2000 the user 2 requests the payment of a product or service at a step 2060. In particular, during this step 2060, the user selects at least one product and authorizes the payment of the price by means of his mobile device. For example, in one embodiment, the user 2 selects one or more products and/or services through a dedicated application or by means of a QR code and transmits a request which authorizes the payment to the system of the merchant 1, that is, the step 2060 can include the steps 2002 to 2016 shown in Figure 4 or the steps 2002 to 2046 shown in Figure 7.

Subsequently, the system of the merchant 1 and/or the management system 4 processes the authorization request and transmits the result of the request to the device of the user 2. For example, the authorization of the purchase can be carried out by the method described with reference to Figure 6, namely the steps 1002-1016, 4002-4010 and 3002-3004.

Alternatively the method of payment could also be used which is described in the Italian patent application TO2011A000861, the content of which is incorporated herein by reference. For example, in this patent application the user receives a message at a step indicated with the number "2014", which indicates the outcome of the authorization of payment.

In general, at the end of the authorization, the user 2 receives an OK1 message at a step in 2062 via his mobile device indicative of the approval of the purchase. This message can be received directly from the management system 4 or via the system of the merchant 1. In general, the approval message OK1 can be any electronic message, such as a message of the short message service (SMS) or an e-mail.

At a step 2064, the user 2 shows the approval message OK1 to the merchant 1 (or a figure responsible for supplying the products/services). For example, in various embodiments, at step 2064 the user shows by means of the application installed on the device 2 a display that contains a summary of the articles purchased. Therefore, in general, the contents of the display viewed in step 2064 are determined according to the content of the approval message OK1.

Subsequently, at a step 2066, the merchant 1 can verify the validity of the purchase on the user's device 2 and can deliver the product or service at a step 2074.

Finally, the method ends at a step 2020.

In various embodiments, to ensure that the same approval message OK1 can only be used for a single purchase, it is envisaged that the merchant 1 can validate the purchase by means of the application installed on the user's device 2. For example, in various embodiments, the merchant 1 checks the list of products at the step 2066 and validates the purchase at a step 2068, for example, by pressing an appropriate button on the display of the mobile device and/or virtually tearing the ticket, for example, by passing his finger on the display of the user's mobile device 2 in a diagonal direction, i.e. from corner to corner.

Therefore, in various embodiments, the application 20 is configured to detect an event at the step 2068 that indicates the validation of the purchase and the application can register the purchase as validated at a step 2070. For example, in one embodiment, when an approval message OK1 is received, this message is saved (if necessary together with the summary of the purchase) in a register of non-validated messages. In particular, in this case, the application only allows the validation of the titles in this register. Once a purchase is validated, the relevant titles are loaded into a second file or register within the application 20 and can only be viewed but no longer validated. Preferably, this validation is also communicated to the system of the merchant 1 to indicate that the product or service has been received.

For example, the method described above can be used to pay for a taxi ride. As described above, the user 2 may detect a QR code via his mobile device that identifies the number of a taxi and the relative cooperative, i.e. a merchant code and a product code. Subsequently, the application 20 could request from the management system 4 the contact details of the cooperative, and the user 2 could insert the requested price for the ride and authorize the payment by inserting his security code (step 2060). At the end of the authorization the application 20 receives the message OK1 confirming the authorization of the payment (step 2062), and the user 2 shows the display that demonstrates the summary of the purchase to the taxi driver (step 2064). The driver, in turn, checks the summary (step 2066) and validates the purchase by pressing a button specifically placed on the display of the mobile device 2 (step 2068). Finally, the application registers the ride as validated and transmits a confirmation message to the system of the merchant 1 (step 2070), for example, via a message, such as a SMS message, which is transmitted to the electronic address of the merchant 1 previously received.

The inventor has observed that the solutions described above have the drawback that the display that is shown in step 2066 to validate the purchase could be falsified. For example, a specially developed application could reproduce all the steps of the original application except the steps that interact with the system of the merchant 1 and/or the management system 4, i.e. the steps required to authorize the payment.

In one embodiment, to avoid this problem, the application 20 receives an element that certifies the validity of the purchase, along with the message OK1 that approves the purchase, i.e. the system that generates the message OK1 also attaches an element of certification to the message.

For example, these elements of certifications can be one or more graphic or sound elements, and/or other visual effects, and are only known by the merchant 1 itself. For example, the element of certification could be at least one of:
- a word, a number, or an alphanumeric sequence in general;
- an image, a sound and/or a video sequence;
- other visual effects, such as a change in color of the display background

In one embodiment, the application displays this certification element at the step 2066, preferably only when validation has occurred at a step 2072. Therefore, the merchant 1 can immediately verify if the correct element is displayed or reproduced.

In one embodiment, the certification element is changed regularly after certain short intervals. For example, in the case of the taxi service, the certification element could be valid for a day, while for other businesses, such as restaurants or cinemas, the element could be only valid for an hour

In one embodiment, the certification element is a code that is not directly shown, such as a univocal code associated with the specific payment. In this case, at step 2066, for example, when the merchant validates the purchase 1 (step 2068) or when the application transmits the confirmation message to the system of the merchant 1 (step 2070), the application 20 transmits this code to the system of the merchant 1 and/or to the management system 4, and receives in response a respective element to display and/or reproduce. This embodiment has the advantage that the user 2 may collect the product even after a long time and the certification code is still valid.

Therefore, in the solutions described above the purchase can be carried out and verified via the user's mobile device 2 and no additional checking devices are required, such as readers or bar code/QR scanners that are used, for example, at airports to check a flight ticket. Indeed, the validity of the purchase can be verified simply by means of the user's mobile device 2 which shows or reproduces graphic, sound and/or visual elements that certify the validity of the title.

Of course, without prejudice to the principle of the invention, the details of construction and the embodiments may be widely varied with respect to what is described and illustrated purely by way of example, without departing from the scope of the present invention, as defined by the following claims.

## Claims

1. A method of paying via a mobile device (2) at least one product and/or service offered by a merchant (1), comprising the steps of:
- transmitting (2060) an electronic message authorizing the payment of said at least one product and/or service to a payment system (1, 3, 4) which manages the payments of said merchant (1);
- receiving (2062) from said payment system (1, 3, 4) an electronic confirmation message (ERR1-ERR5, OK1) being indicative for the result of the payment authorization, and
- in the case said confirmation message (ERR1-ERR5, OK1) is an approval message (OK1) which indicates the authorization of the payment:
a) generating (2064) a display which contains a summary of the products and/or services paid,
b) detecting (2068) an event which validates the payment of said products and/or services, and
c) classifying (2070) said approval message (OK1) as a validated approval message.

2. The method according to Claim 1, wherein:
- said receiving (2062) from said payment system (1, 3, 4) an electronic confirmation message (ERR1-ERR5, OK1) being indicative for the result of the payment authorization comprises archiving said electronic confirmation message (ERR1-ERR5, OK1) in a first register of messages, and
- said classifying (2070) said approval message (OK1) as a validated approval message comprises archiving said approval message (OK1) in a second register of message which may only be viewed but no longer validated.

3. The method according to Claim 1 or Claim 2, wherein said classifying (2070) said approval message (OK1) as a validated approval message comprises:
- transmitting an electronic message indicating that the approval message (OK1) has been validated to said payment system (1, 3, 4).

4. The method according to any of the previous claims, comprising:
- in the case said confirmation message (ERR1-ERR5, OK1) is an approval message (OK1):
d) displaying and/or reproducing at least one graphic or audio element and/or other visual effects, such as a word, a number, an alphanumeric sequence, an image, a sound and/or a video sequence.

5. The method according to Claim 4, wherein said at least one element is displayed and/or reproduced when said event which validates the payment of said products and/or services has been detected.

6. The method according to Claim 4 or Claim 5, comprising receiving said at least one element from said payment system (1, 3, 4) together with said approval message (OK1).

7. The method according to Claim 4 or Claim 5, comprising:
- receiving from said payment system (1, 3, 4) a univocal code together with said approval message (OK1),
- when said event which validates the payment of said products and/or services has been detected, transmitting said univocal code to said payment system (1, 3, 4) and receiving said at least one element from said payment system (1, 3, 4).

8. The method according to any of the previous claims, wherein said detecting (2068) an event which validates the payment of said products and/or services comprises:
- detecting the activation of a validation button,
and/or
- detecting the movement of a finger on the screen of said mobile display along a diagonal direction.

9. The method according to any of the previous claims, wherein said transmitting (2060) an electronic message authorizing the payment of said at least one product and/or service to a payment system (1, 3, 4) which manages the payments of said merchant (1) comprises:
- detecting (2002, 2004) via a sensor (22) a merchant code identifying a merchant (1) and a product code identifying a product or service;
- transmitting (2006) said merchant code and said product code to a management system (4), wherein said management system (4) manages the payments between a plurality of merchants (1) and a plurality of users;
- receiving (2008) from said management system (4) information which allows identification of whether said merchant (1) is trustworthy and whether said product or service is saleable, wherein said information comprises:
a) in the case said merchant is trustworthy, an electronic address and/or a telephone number of said merchant (1), and
b) in the case said product or service is saleable, descriptive and configuration information for said product or service; and
- verifying (2010) whether said merchant (1) is trustworthy and whether said product or service is saleable, and in the case said merchant (1) is trustworthy and said product or service is saleable:
a) displaying (2012) to a user on a display (22) a screen as a function of said information for said product or service,
b) verifying (2014, 2040) whether said user authorizes the payment, and
c) in the case said user authorizes the payment, transmitting (2016, 2046) to said electronic address or telephone number of said merchant (1) a message which authorizes the payment.

10. A mobile device, **characterized in that** said mobile device (2) is configured for implementing the method according to any of claims 1 to 9.

11. A computer-program product that can be loaded into the memory of at least one processor and comprises portions of software code for implementing the method according to any of Claims 1 to 9.
